# EUROPEAN PATENT SPECIFICATION

(11) **EP 1 412 658 B1**
(45) Date of publication and mention of the grant of the patent: **13.07.2005**
(21) Application number: 02749044.0
(22) Date of filing: 17.07.2002
(51) Int. Cl.: F16G 11/10, E04H 17/10, A01K 3/00, H01B 17/14

(54) **WIRE OR LIKE CONNECTORS/TENSIONERS**
VERBINDUNGS/- SPANNVORRICHTUNGEN FÜR DRAHT ODER DERGLEICHEN
CONNECTEURS/TENDEURS DE FILS OU D'ELEMENTS ANALOGUES

(30) Priority: 01.08.2001 GB 0118717; 01.11.2001 GB 0126178
(43) Date of publication of application: 28.04.2004
(73) Proprietor: GRIPPLE LIMITED, Sheffield S4 7UQ (GB)
(72) Inventor: FACEY, Hugh David, Whirlow, Sheffield S11 9PX (GB); BOALER, Derek, Norton, Sheffield S8 8JJ (GB); RHOADES, Anthony, David, George, Sheffield S10 5DJ (GB)
(74) Representative: Hulse, Thomas Arnold
(86) International application number: PCT/GB2002/003347
(87) International publication number: WO 2003/012316

(56) References cited:
- WO-A-91/04137
- WO-A-95/30844
- FR-A- 2 360 802
- GB-A- 2 210 517
- GB-A- 2 240 581
- GB-A- 2 322 408
- US-A- 4 878 270

## Description

This invention relates to connectors for wire or the like, e.g. cables or strands, hereinafter referred to simply as "wire", and has for its object the provision of a connector assembly capable of transmitting tension to a wire whilst electrically insulating it from a terminal post, e.g., in an electrical fencing system.

It is known from FR-A-2360802 to provide a device for holding fencing or similar wire to a structure such as a fence post, the device comprising a metal body having a first passage through which the wire passes, a second intersecting passage carrying a ball or disc which is spring-biassed towards the intersection towards which it rolls into a position in which it locks the wire under tension. A third passage parallel to the first passage can receive the wire therethrough before the wire is passed round a fence post and through the first passage to enable the wire to be secured to the post (without need of a hole in the post) and tensioned. Also, two such devices abutted end-to-end can be used to connect two wires together.

It is known from GB-A-2210517 to provide metal-bodied connectors in which wires are located in twin bores in close lengthwise relationship and are urged towards the intervening thin wall by wedge means, e.g. balls (or rollers) guided within channels which converge towards the inlet ends of respective bores, with compression springs between abutments and the balls (or rollers) to urge the latter into gripping engagement with the wires.

It is also known from GB-A-2240581 to provide ribs on rollers in a connector as in GB-A-2210517 to enhance the grip of the rollers, and from WO-9530844 to provide ribbed wedges in a connector as in GB-A-2210517.

Furthermore, it is also known from GB-A-2322408 to use a connector as in WO-A-9530844 to form a loop or "eye" in a wire (or cable), and it will be evident therefrom that such a connector could be used to secure and tension a loop of wire round a fence post.

Each of the above prior art metal-bodied devices not only transmits tension from one wire to another, or from the one wire to a fence post, but also is capable of conducting electricity by direct contact of wire-with-wire or via the connector body, or wire-with-post.

In contrast, according to the present invention, a method of connecting an electric fence wire to a post comprises providing a wire connector of the type having a body within which wedge members (e.g. balls, rollers or wedges) are guided in channels converging towards the inlet ends of respective bores into which wires or strands can be inserted and protrude from outlet ends of the bores, and which wedge members are urged by compression springs towards the respective bores, together with a non-electrically-conducting flexible filament, extending fixedly from one end of the body, the free end of the filament is inserted into the bore nearest the fixed end of the filament to form a loop passing round the fence post and the filament is pushed through that bore to protrude from its outlet, the free end of the filament is pulled for setting of the proximity of the connector to the post, then an end of the electrical fence wire is inserted into the other bore inlet and pushed through that bore to protrude from its outlet, and the free end of the wire or the free end of the filament is pulled (as by a tool such as is described in WO-A-9104137 or a blind rivetting tool) to tension the fence wire and also the filament looped round the post; assuming the other end of the fence wire being similarly secured to a fence post or connected to a wire or wires ultimately secured to a fence post, the tension being secured by the wedge members being urged by their respective springs into gripping engagement with the filament and the wire respectively. Alternatively, the connector is first applied to the electrical fence wire until it protrudes from the outlet of the bore into which it had been inserted, then the filament is looped round the post and has its free end inserted into the other bore and pushed through that bore to protrude from its outlet end, and the free end of the wire or the free end of the filament is pulled to tension the fence wire and also the filament looped round the post. Surplus wire may be cut off to avoid any possible contact with the post, but sufficient wire may be left protruding, to enable it to be pulled (as by a tool, e.g. as referred to above) for re-tensioning of the wire.

While the connector body may be made of metal, it is preferably made of non-electrically-conducting material, a suitable example of which is glass-filled nylon, and it may be conveniently formed as a one-piece moulding with both channels open to respective end faces, the ends of the channels being closed by abutments for the springs after insertion of the wedge members and springs, and the abutments being secured by pinning or ultrasonic welding or by snap-fitting into the ends of the channels.

Each end of the body of the wire connector is preferably provided with a rebated formation for location of the abutment portion of a pulling tool, such as is described in WO-A-9104137.

A suitable non-electrically-conducting flexible filament is available from Bayer, being already in use for horticultural purposes, and it may be fixed to the connector body by passing the free end through a hole extending from one side of the body to an end thereof and providing a head or collar on the other end of the filament fitting a counterbore in the hole.

Greater structural security may be afforded by forming the non-electrically-conducting filament of wire or wire rope coated with insulating material.

The wedge members (whether balls, wedges or - preferably -rollers) may be made of metal, e.g. by sintering and may be coated with an anti-rust material, e.g. zinc, but are preferably made of non-electrically-conducting material, e.g. ceramic material.

At least one end of the connector may be provided with lugs for location of a separate portion of electrically-conducting wire used for parallel linking of a plurality of electrical fence wires, each of which is secured to a fence post by a similar wire connector, the linking wire being twisted round each fence wire. The lugs may be hook-like, so that a linking wire is engaged with each lug by means of a snap-action.

Also in accordance with the present invention there is provided means for connecting an electric fence wire to a post comprising a wire connector having a body within which wedge members (e.g. balls, rollers or wedges) are guided in channels converging towards the inlet ends of respective bores into which wires can be inserted and protrude from outlet ends of the bores, and which wedge members are urged by compression springs towards the respective bores, together with a non-electrically-conducting flexible filament extending fixedly from one end of the body.

The filament may be provided with a head or collar on one end to fit in a counterbore in a hole from one side of the body to an end thereof following passing of the other end of the filament through the hole from the side to the end of the body; and the filament may be formed of wire or wire rope coated with insulating material.

An embodiment of the invention will now be described, by way of example only, with reference to the accompanying drawings, in which:-
Figure 1 is an isometric view from one end of a wire connector with a non-electrically-conducting flexible filament in accordance with the invention;
Figure 2 is a longitudinal section through the connector of Figure 1;
Figure 3 is an isometric view from the other end of the connector shown in readiness for securing to a post by its filament;
Figure 4 corresponds to Figure 2 but shows the connector after tensioning of its filament and tensioning of an electrical fence wire, which is also seen in Figure 3;
Figure 5 shows two connectors in accordance with the invention, seen in elevation from the same end as in Figure 1, incorporated in an electrified fence with the two fence wires linked in parallel;
Figure 6 is a part-sectional enlarged fragment of a non-electrically-conducting flexible filament formed of wire coated with insulating material; and
Figure 7 corresponds to Figure 6 but shows a filament formed of wire rope coated with insulating material.

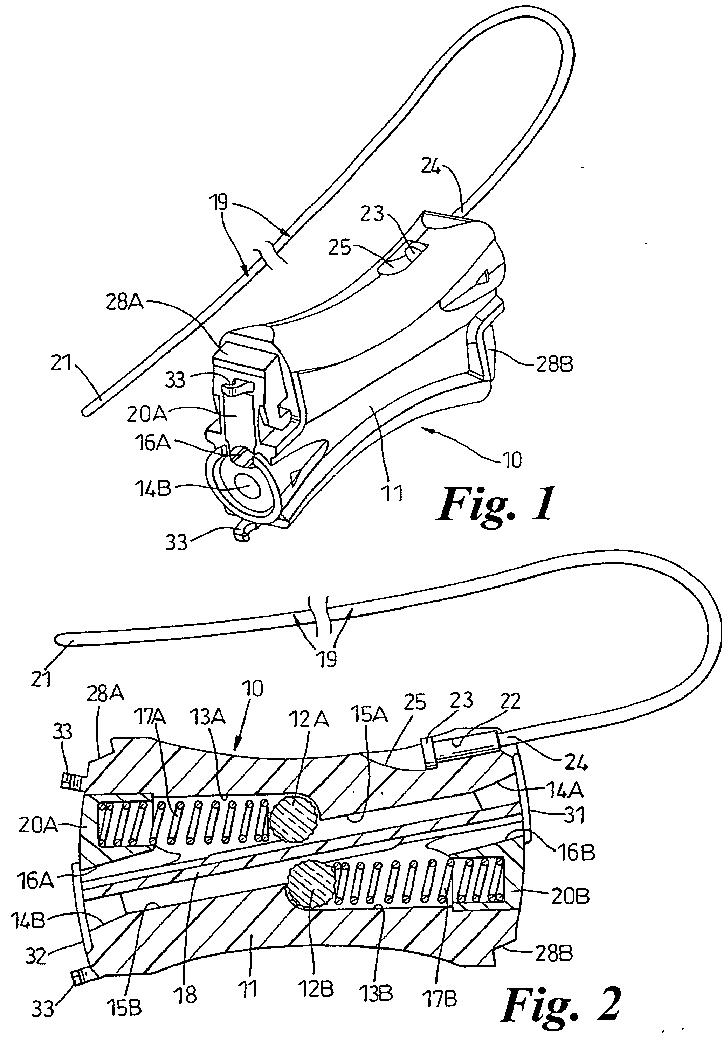

The wire connector 10 shown in Figures 1 to 4 has a body 11 within which rollers 12A, 12B are guided in channels 13A, 13B converging towards the inlet ends 14A, 14B of respective bores 15A, 15B into which wires can be inserted and protrude from outlet ends 16A, 16B of the bores, and which rollers are urged by compression springs 17A, 17B towards the respective bores, and the connector is characterized in that the body 11 is formed of rigid non-electrically-conducting material with an integral wall 18 between the bores, and is associated with a non-electrically-conducting flexible filament 19 fixedly extending from one end of the body.

Abutment members 20A, 20B (preferably of non-electrically-conducting material) are secured in initially open ends of the channels 13A, 13B after insertion of the rollers 12A, 12B and springs 17A, 17B.

The flexible filament 19 is fixed to the connector body 11 by passing an end 21 through a hole 22 from one side of the body to an end thereof and providing a head or collar 23 on the other end 24 of the filament fitting a counterbore 25 in the hole.

A suitable material for the connector body 11 is glass-filled nylon, and the abutments 20A, 20B may be secured by pinning or ultrasonic welding or by snap-fitting into the ends of the channels 13A, 13B. A suitable non-electrically-conducting flexible filament is available from Bayer, being already in use for horticultural purposes.

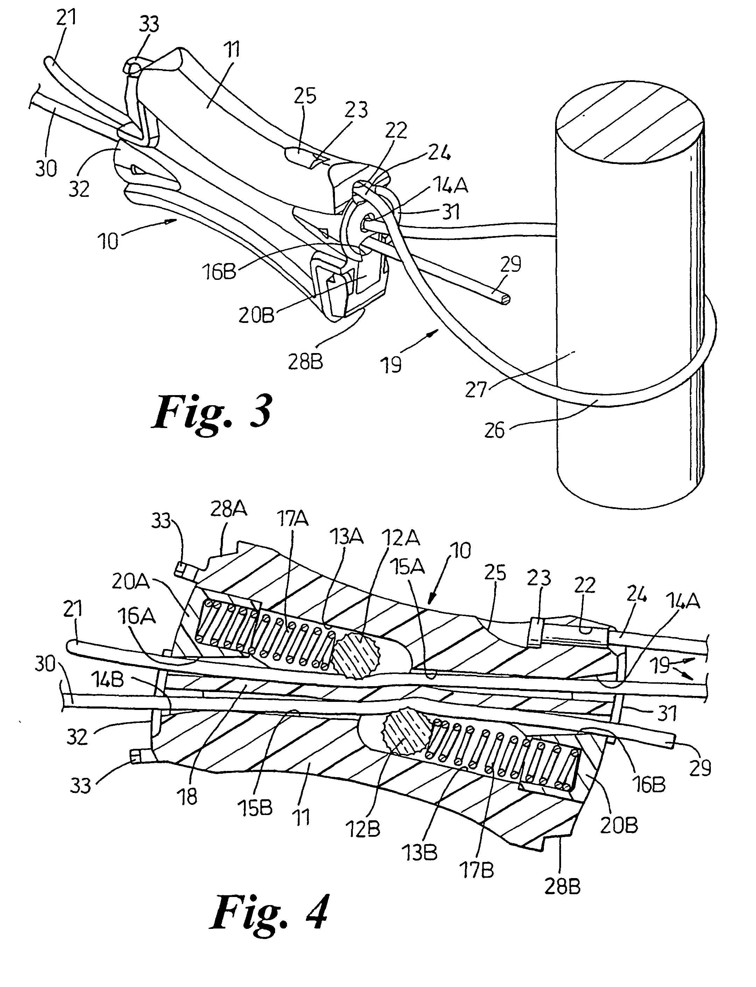

As shown in Figure 3, the free end 21 of the filament 19 can be inserted into the bore inlet 14A nearest the fixed end 24 of the filament after forming a loop 26 for passing round a fence post 27 and the filament pushed through that bore 15A to protrude from its outlet 16A to enable the free end 21 of the filament to be pulled, as by a tool such as is described in WO-A-9104137 (not shown) which can be positively located on a rebated formation 28A on the body 11, for setting of the proximity of the connector to the post, then an end 29 of an electrical fence wire 30 can be inserted into the other bore inlet 14B and pushed through that bore 15B to protrude from its outlet end 16B to enable the free end 29 of the wire to be pulled, as by a tool as referred to above positively located on another rebated formation 28B on the body, to tension the fence wire 30 and also the filament 19 looped round the post 27, assuming the other end (not shown) of the fence wire 30 being similarly secured to a fence post or connected to a wire or wires ultimately secured to a fence post, the tension being secured by the rollers 12A, 12B, being urged by their respective springs 17A, 17B into gripping engagement with the filament 19 and the wire 30 respectively, as shown in Figure 4.

Surplus wire may be cut off flush with the adjacent end 31 of the body 11, but sufficient wire is preferably left protruding to enable it to be pulled by re-application of the tensioning tool, if and when the fence wire 30 becomes slack.

The rollers 12A, 12B may be made of metal, e.g. by sintering and may be coated with an anti-rust material, e.g. zinc, but are preferably made of non-electrically-conducting material, e.g. ceramic material, as indicated in Figures 2 and 4; and, in either case, are preferably formed with ribs or teeth (or other surface features) to enhance the grip on the filament 19 and the fence wire 30, which grip may be further enhanced by localised distortion of the wall 18 between the bores 15A, 15B (as shown in Figure 4) without breaching the wall, increasing frictional contact between the filament 19 and the wire 30 with the respective bores.

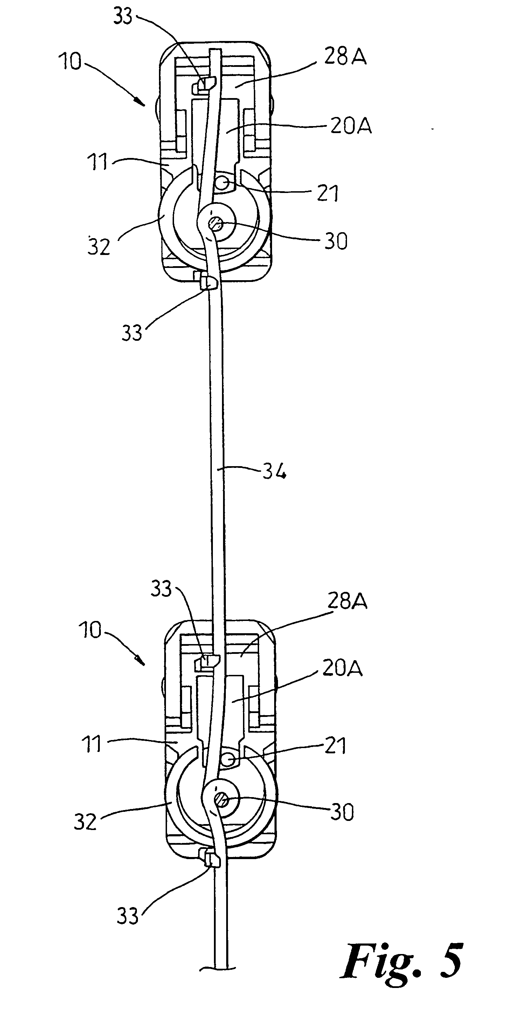

One end 32 of the body 11 is shown provided with lugs 33 for location of a separate portion 34 (see Figure 5) of electrically-conducting wire used for parallel linking of a plurality of electrical fence wires 30, each of which is secured to a fence post by a similar wire connector 10, the linking wire 34 being twisted round each fence wire 30, and the lugs 33 being hook-like, so that the linking wire engages them by means of a snap-action.

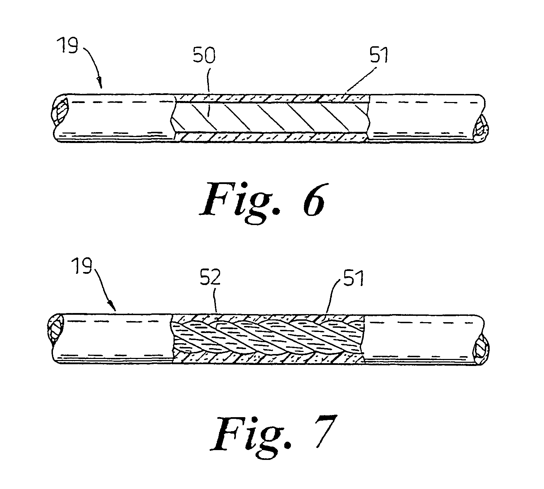

Greater structural security may be afforded to an electric fence incorporating connectors 10 or 14 and associated filaments 19 by forming the filaments of wire 50 coated with insulating material 51 (as shown in Figure 7) or of wire rope 52 coated with insulating material (as shown in Figure 8).

## Claims

1. A method of connecting an electric fence wire to a post comprising providing a wire connector of the type having a body within which wedge members are guided in channels converging towards the inlet ends of respective bores into which wires or strands can be inserted and protrude from outlet ends of the bores, and which wedge members are urged by compression springs towards the respective bores, together with a non-electrically-conducting flexible filament extending fixedly from one end of the body, the free end of the filament is inserted into the bore nearest the fixed end of the filament to form a loop passing round the fence post and the filament is pushed through that bore to protrude from its outlet, the free end of the filament is pulled for setting of the proximity of the connector to the post, then an end of an electrical fence wire is inserted into the other bore inlet and pushed through that bore to protrude from its outlet, and the free end of the wire is pulled to tension the fence wire and also the filament looped round the post.

2. A method of connecting an electric fence wire to a post comprising providing a wire connector of the type having a body within which wedge members are guided in channels converging towards the inlet ends of respective bores into which wires or strands can be inserted and protrude from outlet ends of the bores, and which wedge members are urged by compression springs towards the respective bores, together with a non-electrically-conducting flexible filament extending fixedly from one end of the body, the connector is first applied to the electrical fence wire until it protrudes from the outlet of the bore into which it had been inserted, then the filament is looped round the post and has its free end inserted into the other bore and pushed through that bore to protrude from its outlet end, and the free end of the wire or the free end of the filament is pulled to tension the fence wire and also the filament looped round the post.

3. A method as in Claim 1 or in Claim 2, wherein surplus wire is cut off.

4. A method as in Claim 3, wherein sufficient wire is left protruding, to enable it to be pulled for re-tensioning of the wire.

5. A method as in any one of Claims 1 to 4, wherein the connector body is made of metal.

6. A method as in any one of Claims 1 to 4, wherein the connector body is made of non-electrically-conducting material.

7. A method as in Claim 6, wherein the connector body is made of glass-filled nylon.

8. A method as in Claim 6 or Claim 7, wherein the connector body is formed as a one-piece moulding with both channels open to respective end faces, the ends of the channels being closed by abutments for the springs after insertion of the wedge members and springs, and the abutments being secured by pinning or ultrasonic welding or by snap-fitting into the ends of the channels.

9. A method as in any one of Claims 1 to 8, wherein each end of the body of the wire connector is provided with a rebated formation for location of the abutment portion of a pulling tool.

10. A method as in any one of Claims 1 to 9, wherein the non-electrically-conducting flexible filament is fixed to the connector body by passing the free end through a hole extending from one side of the body to an end thereof and providing a head or collar on the other end of the filament fitting a counterbore in the hole.

11. A method as in any one of Claims 1 to 10, wherein greater structural security is afforded by forming the non-electrically-conducting filament of wire or wire rope coated with insulating material.

12. A method as in any one of Claims 1 to 11 wherein the wedge members are made of non-electrically-conducting material.

13. A method as in Claim 12, wherein the wedge members are made of ceramic material.

14. A method as in any one of Claims 1 to 13, wherein at least one end of the connector is provided with lugs for location of a separate portion of electrically-conducting wire used for parallel linking of a plurality of electrical fence wires, each of which is secured to a fence post by a similar wire connector, the linking wire being twisted round each fence wire.

15. A method as in Claim 14 wherein the lugs are hook-like, so that a linking wire is engaged with each lug by means of a snap-action.

16. Means for connecting an electric fence wire to a post comprising a wire connector having a body within which wedge members are guided in channels converging towards the inlet ends of respective bores into which wires can be inserted and protrude from outlet ends of the bores, and which wedge members are urged by compression springs towards the respective bores, together with a non-electrically-conducting flexible filament extending fixedly from one end of the body.

17. Means as in Claim 16, wherein the filament is provided with a head or collar on one end to fit in a counterbore in a hole from one side of the body to an end thereof following passing of the other end of the filament through the hole from the side to the end of the body.

18. Means as in Claim 16 or Claim 17, wherein the filament is formed of wire or wire rope coated with insulating material.

## Patentansprüche

1. Verfahren zum Verbinden eines Elektrozaundrahtes mit einem Pfahl, umfassend: Bereitstellen eines Drahtverbinders des Typs mit einem Körper, in dem Keilmittel in Kanälen geführt werden, welche zu den Emtrittsenden entsprechender Bohrungen hin konvergieren, in die Drähte oder Litzen eingeführt werden können und aus Austrittsenden der Bohrungen herausragen, wobei die Keilmittel mittels Druckfedern zu den jeweiligen Bohrungen hin gedrängt werden, zusammen mit einem elektrisch nicht leitenden flexiblen Filament, das sich fest angebracht von einem Ende des Körpers erstreckt, wobei das freie Ende des Filaments in die Bohrung, die dem fest angebrachten Ende des Filaments am nächsten liegt, so eingeführt wird, dass eine Schlaufe entsteht, die um den Zaunspfahl herum verläuft, und wobei das Filament derart durch die Bohrung geschoben wird, dass es aus dem Austrittsende dieser Bohrung herausragt, wobei durch Ziehen am freien Ende des Filaments die Nähe des Verbinders zum Pfosten eingestellt wird, woraufhin ein Ende eines Elektrozaundrahtes in die Eintrittsöffnung der anderen Bohrung eingeführt wird und derart durch diese Bohrung geschoben wird, dass es aus dem Austrittsende dieser Bohrung herausragt, wobei am freien Ende des Drahtes gezogen wird, um den Zaundraht und auch das als Schlaufe um den Pfahl gelegte Filament zu spannen.

2. Verfahren zum Verbinden eines Elektrozaundrahtes mit einem Pfahl, umfassend: Bereitstellen eines Drahtverbinders des Typs mit einem Körper, in dem Keilmittel in Kanälen geführt werden, welche zu den Eintrittsenden entsprechender Bohrungen hin konvergieren, in die Drähte oder Litzen eingeführt werden können und aus Austrittsenden der Bohrungen herausragen, wobei diese Keilmittel mittels Druckfedern zu den jeweiligen Bohrungen hin gedrängt werden, zusammen mit einem elektrisch nicht leitenden flexiblen Filament, das sich fest angebracht von einem Ende des Körpers erstreckt, wobei der Verbinder zuerst mit dem Elektrozaundraht in Eingriff gebracht wird, bis dieser aus dem Austrittsende der Bohrung, in die er eingeführt wurde, herausragt, woraufhin das Filament als Schlaufe um den Pfahl herum gelegt wird und sein freies Ende in die andere Bohrung eingeführt wird und derart durch diese Bohrung geschoben wird, dass es aus dem Austrittsende dieser Bohrung herausragt, woraufhin an dem freien Ende des Drahtes oder an dem freien Ende des Filaments gezogen wird, um den Zaundraht und auch das als Schlaufe um den Pfahl gelegte Filament zu spannen.

3. Verfahren nach Anspruch 1 oder Anspruch 2, **dadurch gekennzeichnet, dass** überschüssiger Draht abgeschnitten wird.

4. Verfahren nach Anspruch 3, **dadurch gekennzeichnet, dass** man genügend Draht herausstehen lässt, um ihn zum Nachspannen des Drahtes ziehen zu können.

5. Verfahren nach einem der Ansprüche 1 bis 4, **dadurch gekennzeichnet, dass** der Verbinderkörper aus Metall besteht.

6. Verfahren nach einem der Ansprüche 1 bis 4, **dadurch gekennzeichnet, dass** der Verbinderkörper aus elektrisch nicht leitendem Material besteht.

7. Verfahren nach Anspruch 6, **dadurch gekennzeichnet, dass** der Verbinderkörper aus glasgefülltem Nylon besteht.

8. Verfahren nach Anspruch 6 oder Anspruch 7, **dadurch gekennzeichnet, dass** der Verbinderkörper ein einstückig ausgebildetes Formteil ist, wobei beide Kanäle zu den jeweiligen Stirnflächen hin offen sind, wobei die Enden der Kanäle durch Anschlagflächen für die Federn verschlossen werden, nachdem die Keilmittel und die Federn eingeführt wurden, und wobei die Anschlagflächen durch Anheften oder Ultraschallschweißen oder durch Einrasten in die Enden der Kanäle befestigt werden.

9. Verfahren nach einem der Ansprüche 1 bis 8, **dadurch gekennzeichnet, dass** jedes Ende des Körpers des Drahtverbinders mit einem eingefalzten Gebilde versehen ist, um den Ansetzabschnitt eines Zugwerkzeugs anzusetzen.

10. Verfahren nach einem der Ansprüche 1 bis 9, **dadurch gekennzeichnet, dass** das elektrisch nicht leitende flexible Filament an dem Verbinderkörper in der Weise befestigt ist, dass das freie Ende durch eine Bohrung geführt wird, die sich von einer Seite des Körpers zu einem Ende des Körpers hin erstreckt, und dass ein Kopf oder Bund am anderen Ende des Filaments angebracht wird, der in eine in die Bohrung eingebrachte Senkung passt.

11. Verfahren nach einem der Ansprüche 1 bis 10, **dadurch gekennzeichnet, dass** eine höhere Festigkeitssicherheit **dadurch** erreicht wird, dass das elektrisch nicht leitende Filament aus Draht oder Drahtseil hergestellt ist, der bzw. das mit einem isolierenden Material überzogen ist.

12. Verfahren nach einem der Ansprüche 1 bis 11, **dadurch gekennzeichnet, dass** die Keilmittel aus elektrisch nicht leitendem Material bestehen.

13. Verfahren nach Anspruch 12, **dadurch gekennzeichnet, dass** die Keilmittel aus Keramikmaterial bestehen.

14. Verfahren nach einem der Ansprüche 1 bis 13, **dadurch gekennzeichnet, dass** wenigstens ein Ende des Verbinders mit Nasen versehen ist, um einen separaten Abschnitt eines elektrisch leitenden Drahtes anzuordnen, der zum parallelen Verbinden einer Mehrzahl von Elektrozaundrähten verwendet wird, von denen jeder mit einem ähnlichen Drahtverbinder an einem Zaunpfahl befestigt ist, wobei der Verbindungsdraht um jeden Zaundraht herum gewunden ist.

15. Verfahren nach Anspruch 15, **dadurch gekennzeichnet, dass** die Nasen hakenartig sind, dergestalt, dass ein Verbindungsdraht in jede Nase eingeschnappt werden kann.

16. Mittel zum Verbinden eines Elektrozaundrahtes mit einem Pfahl, umfassend einen Drahtverbinders mit einem Körper, in dem Keilmittel in Kanälen geführt werden, welche zu den Eintrittsenden entsprechender Bohrungen hin konvergieren, in die Drähte eingeführt werden können und aus Austrittsenden der Bohrungen herausragen, wobei diese Keilmittel mittels Druckfedern zu den jeweiligen Bohrungen hin gedrängt werden, zusammen mit einem elektrisch nicht leitenden flexiblen Filament, das sich fest angebracht von einem Ende des Körpers erstreckt.

17. Mittel nach Anspruch 16, **dadurch gekennzeichnet, dass** das Filament an einem Ende mit einem Kopf oder Bund versehen ist, der in eine Senkung in einer Bohrung passt, die sich von einer Seite des Körpers zu einem Ende des Körpers hin erstreckt, nachdem das andere Ende des Filaments von der Seite zu dem Ende des Körpers hin durch die Bohrung geschoben wurde.

18. Mittel nach Anspruch 16 oder Anspruch 17, **dadurch gekennzeichnet, dass** das Filament aus Draht oder Drahtseil, der bzw. das mit einem isolierenden Material überzogen ist, hergestellt ist.

## Revendications

1. Procédé de connexion d'un fil de clôture électrique sur un poteau comprenant la prévision d'un connecteur de fil du type présentant un corps dans lequel des pièces de coincement sont guidées dans des canaux convergeant vers les extrémités d'entrée d'alésages respectifs dans lesquels des fils ou des torons peuvent être insérés et peuvent dépasser des extrémités de sortie des alésages, les pièces de coincement étant poussées par des ressorts de compression vers les alésages respectifs en conjonction avec un filament flexible non-conducteur de l'électricité s'étendant, de façon fixe, à partir d'une extrémité du corps, l'extrémité libre du filament étant insérée dans l'alésage le plus proche de l'extrémité fixée du filament afin de former une boucle entourant le poteau de clôture et le filament étant poussé à travers cet alésage pour dépasser de sa sortie, l'extrémité libre du filament étant tirée pour installer la proximité du connecteur au poteau, une extrémité d'un fil de clôture électrique étant ensuite insérée dans l'autre entrée d'alésage et poussée à travers cet alésage pour dépasser de sa sortie, et l'extrémité libre du fil étant tirée pour tendre le fil de clôture et le filament étant enroulé, de même, autour du poteau.

2. Procédé de connexion d'un fil de clôture électrique à un poteau comprenant la prévision d'un connecteur de fil du type possédant un corps dans lequel des pièces de coincement sont guidées dans des canaux convergeant vers les extrémités d'entrée d'alésages respectifs dans lesquels des fils ou des torons peuvent être insérés et peuvent dépasser des extrémités de sortie des alésages, les pièces de coincement étant poussées par des ressorts de compression vers les alésages respectifs en conjonction avec un filament flexible non-conducteur de l'électricité s'étendant, de façon fixe, à partir d'une extrémité du corps, le connecteur étant tout d'abord appliqué au fil de clôture électrique jusqu'à ce qu'il dépasse de la sortie de l'alésage dans lequel il a été inséré, le filament étant alors enroulé autour du poteau et son extrémité libre insérée dans l'autre alésage et poussée à travers cet alésage pour dépasser de son extrémité de sortie, et l'extrémité libre du fil ou l'extrémité libre du filament étant tirée pour tendre le fil de clôture et le filament étant enroulé, de même, autour du poteau.

3. Procédé selon la revendication 1 ou 2, dans lequel le fil en excédent est coupé.

4. Procédé selon la revendication 3, dans lequel une longueur suffisante de fil est laissée en protubérance pour lui permettre d'être tiré pour remettre en tension le fil.

5. Procédé selon l'une quelconque des revendications 1 à 4, dans lequel le corps de connecteur est réalisé en métal.

6. Procédé selon l'une quelconque des revendications 1 à 4, dans lequel le corps de connecteur est réalisé dans un matériau non-conducteur de l'électricité.

7. Procédé selon la revendication 6, dans lequel le corps de connecteur est réalisé en Nylon chargé de fibres de verre.

8. Procédé selon la revendication 6 ou 7, dans lequel le corps de connecteur est formé selon un moulage monobloc, chacun des canaux débouchant sur des faces respectives d'extrémité, les extrémités des canaux étant fermées par des butées de ressort après insertion des pièces de coincement et des ressorts, les butées étant fixées par enfilage ou par soudage à ultrasons ou par encliquetage dans les extrémités des canaux.

9. Procédé selon l'une quelconque des revendications 1 à 8, dans lequel chaque extrémité du corps du connecteur de fil est munie d'une formation de bord rabattu pour le positionnement d'une partie de butée d'un outil de traction.

10. Procédé selon l'une quelconque des revendications 1 à 9, dans lequel le filament flexible non-conducteur de l'électricité est fixé au corps du connecteur en faisant passer l'extrémité libre à travers un trou s'étendant d'un coté du corps vers son extrémité et en prévoyant une tête ou un collier sur l'autre extrémité du filament s'adaptant à un contre alésage dans le trou.

11. Procédé selon l'une quelconque des revendications 1 à 10, dans lequel on obtient une plus grande sécurité structurelle en formant le filament non-conducteur de l'électricité du fil ou du câble revêtu d'un matériau isolant.

12. Procédé selon l'une quelconque des revendications 1 à 11, dans lequel les pièces de coincement sont réalisées dans un matériau non-conducteur de l'électricité.

13. Procédé selon la revendication 12, dans lequel les pièces de coincement sont réalisées en un matériau céramique.

14. Procédé selon l'une quelconque des revendications 1 à 13, dans lequel au moins une extrémité du connecteur est munie de pattes pour le positionnement d'une partie séparée du fil conducteur de l'électricité utilisée pour lier en parallèle une pluralité de fils électriques de clôture, chacun d'eux étant fixés sur un poteau de clôture à l'aide d'un connecteur similaire de fil, le fil de liaison étant torsadé autour de chaque fil de clôture.

15. Procédé selon la revendication 14, dans lequel les pattes sont en forme de crochet de façon à ce qu'un fil de liaison soit engagé par chaque patte au moyen d'un encliquetage.

16. Moyen de connexion d'un fil de clôture électrique à un poteau comprenant un connecteur de fil possédant un corps dans lequel sont guidées des pièces de coincement dans des canaux convergeant vers les extrémités d'entrée d'alésages respectifs dans lesquels des fils peuvent être insérés et peuvent dépasser des extrémités de sortie des alésages, les pièces de coincement étant poussées par des ressorts de compression vers les alésages respectifs en conjonction avec un filament flexible non-conducteur de l'électricité s'étendant de facon fixe à partir d'une extrémité du corps.

17. Moyen selon la revendication 16, dans lequel le filament est muni d'une tête ou collier à une extrémité pour s'adapter à l'intérieur d'un contre-alésage d'un trou à partir d'un coté du corps vers son extrémité, l'autre extrémité du filament étant ensuite passée à travers le trou à partir du coté vers l'extrémité du corps.

18. Moyen selon la revendication 16 ou 17, dans lequel le filament est formé d'un fil ou d'un câble revêtu d'un matériau isolant.
